# DEMANDE DE BREVET EUROPEEN

(11) **EP 2 575 374 A1**
(43) Date de publication de la demande: **03.04.2013**
(21) Numéro de dépôt: 12186616.4
(22) Date de dépôt: 28.09.2012
(51) Int. Cl.: H04N 21/81, H04N 21/858, H04N 21/4788, H04N 21/435

(54) **Procede d'interaction avec un reseau social en fonction d'informations televisuelles**

(30) Priorité: 30.09.2011 FR 1158845
(71) Demandeur: France Télécom, 75015 Paris (FR)
(72) Inventeur: Vivolo, Olivier, 35000 RENNES (FR); Guionnet, Chantal, 35510 CESSON-SEVIGNE (FR)
(74) Mandataire: Cabinet Plasseraud

(57) **Abrégé**

La présente invention concerne un procédé mis en oeuvre par des moyens informatiques, d'interprétation d'un flux multimédia (200) pour une interaction avec un espace d'un réseau social. Le flux (200) comporte au moins une information de contenu transporté dans le flux. En outre, e procédé comporte les étapes de réception du flux (200), de lecture (201) dans le flux (200) de l'information de contenu multimédia, et d'interaction (204) avec un espace de réseau social en fonction de l'information de contenu lue.

## Description

La présente invention concerne le domaine de la télévision interactive.

L'émergence des postes de télévision connectés à Internet (ou appelés « télévisions connectées ») permet à un utilisateur de naviguer sur le Web, et en particulier sur les réseaux sociaux depuis son poste de télévision. Pour ce faire, l'utilisateur doit préalablement lancer le navigateur Internet du poste de télévision et quitter alors l'émission de télévision en cours.

En particulier, aucune interaction entre le monde télévisuel et les réseaux sociaux n'est aujourd'hui proposée.

Il existe pourtant des réseaux sociaux dédiés au monde de la télévision, comme StarlingTV. Ces réseaux sociaux permettent de réunir les personnes ayant un intérêt commun pour certains canaux (ou chaines) ou programmes télévisuels. Lorsqu'un utilisateur souhaite échanger/partager avec des personnes regardant la même émission que lui, celui-ci se connecte à un espace dédié à cette émission d'un réseau social.

Cependant, de telles méthodes de partage ou d'échange ne sont pas exempts de défaut sur une télévision connectée.

En effet, le téléspectateur doit effectuer, une action particulière afin d'accéder aux espaces de discussion qui lui conviennent.

De plus, le fait de, simultanément, regarder une émission et se connecter à un espace d'un réseau social en lien avec cette dernière émission via le poste de télévision n'est pas possible sur l'ensemble des postes de télévision.

Il existe ainsi un besoin pour lier plus fortement les réseaux sociaux et les données télévisuelles.

La présente invention vient améliorer la situation.

A cet effet, la présente invention propose une interaction avec un réseau social en fonction d'informations de contenus du flux multimédia.

La présente invention vise alors un procédé mis en oeuvre par des moyens informatiques, d'interprétation d'un flux multimédia pour une interaction avec un espace d'un réseau social. Le flux comporte au moins une information de contenu transporté dans le flux.

Le procédé comporte les étapes :
- réception du flux,
- lecture dans le flux de l'information de contenu multimédia,
- interaction avec un espace de réseau social en fonction de l'information de contenu lue.

Un tel procédé permet d'adapter facilement l'interaction avec le réseau social en fonction de ce que l'utilisateur regarde ou écoute.

Un espace du réseau social peut être une page Internet regroupant certains utilisateurs de ce réseau social (et/ou les publications de ces utilisateurs).

Les informations de contenu peuvent être des métadonnées insérées dans le flux pour l'enrichir. Par exemple, ces informations de contenus peuvent être, de manière non limitative :
- un (ou plusieurs) identifiant(s) d'espace du réseau social associé à cette diffusion ou à ce contenu ;
- un identifiant du film diffusé par des mécanismes de vidéo à la demande.

Le flux peut être un flux de données télévisuelles ou de radiodiffusion. Alors, l'information de contenu peut comporter une information de programme et/ou de canal.

Cette information peut être alors :
- un identifiant du canal de diffusion (par exemple, « CNN » ou « France Inter ») ;
- un identifiant de programme diffusé (par exemple, « Dr House S02E05 » ou « I Wanna Be Where You Are de Michael Jackson »).

Avantageusement, cette information de contenu permet de déterminer de manière simple le canal ou le programme regardé par un utilisateur.

Avantageusement la connaissance de cette information de contenu permet au procédé une interaction directe et automatique avec un réseau social en liaison avec l'information. Dans l'exemple précédent, où l'identifiant de programme correspond à "Dr House S02E05 ", une connexion automatique à un réseau social relatif à la série "Dr House" pourra être réalisée. Naturellement, le caractère automatique de cette connexion sera de préférence géré via une mise en oeuvre conditionnelle du procédé, de manière à ce qu'il ne soit pas perçu comme intrusif. En d'autres termes, il sera prudent d'accorder à l'utilisateur le choix, au cours d'une session de visionnage de programmes TV, de valider ou non la mise en oeuvre du procédé automatique de connexion au réseau social.

Le procédé peut comprendre en outre une étape d'identification d'un espace choisi d'un réseau social associé au moins à l'information de contenu lue. L'interaction avec un espace de réseau social peut alors comprendre une étape de connexion à cet espace choisi.

L'étape de connexion peut être une identification à l'espace choisi du réseau social aux moyens des identifiants de l'utilisateur.

L'étape de connexion peut être, en complément ou en variante, un enregistrement/abonnement de l'utilisateur à l'espace du réseau social, de telle sorte que l'ensemble des publications des utilisateurs de cet espace lui soit adressé.

Avantageusement, ce procédé peut faciliter la connexion automatique des utilisateurs à l'espace des réseaux sociaux le plus approprié en fonction de l'activité de l'utilisateur sur son poste de télévision.

Ce procédé peut faciliter la connexion des utilisateurs à un espace réseau social accessible à un groupe en lien direct avec l'activité de l'utilisateur sur son poste de télévision. Par exemple, lorsque l'utilisateur regarde un film, le service de réseau social peut lui proposer d'adhérer à un groupe des amis d'un des acteurs du film, du réalisateur, des thèmes abordés dans le film, etc. et d'accéder à un espace dédié à ce groupe.

Le procédé présenté ci-dessus peut comprendre en outre, préalablement au moins à l'interaction, une étape de mémorisation d'au moins une association entre l'information de contenu lue et l'espace choisi.

Ainsi, il est aisé, à partir de cette association préalablement mémorisée, de connaître l'espace du réseau social le plus approprié à l'émission/le canal regardé par l'utilisateur (par exemple).

L'interaction avec un espace de réseau social peut comprendre les étapes de:
- connexion à un espace de réseau social prédéterminé,
- publication d'un message dans l'espace de réseau social prédéterminé, le message étant fonction de l'information de contenu lue.

Le message publié peut être alors personnalisé en fonction de l'émission regardée par l'utilisateur. Ainsi, il est possible d'informer les personnes connaissant l'utilisateur (ou encore les membres de l'espace du réseau social) de l'activité de cet utilisateur.

Le message peut être : « M. X regarde l'émission YYYY et vous la conseille ».

Le flux multimédia réceptionné peut comporter au moins une information de canal. Ainsi, l'interaction avec un espace du réseau social peut être, en outre, fonction d'un paramètre temporel.

Ce paramètre temporel peut être une indication de temps comme :
- une date et une heure (et éventuellement un fuseau horaire) ;
- un temps UNIX (nombre de secondes écoulées depuis le 1er janvier 1970 00:00:00 UTC);
- un compteur incrémental.

L'interaction avec un espace du réseau social peut être alors fonction d'une information de programme, l'information de programme étant déterminée par croisement de l'information de canal lue et du paramètre temporel dans une grille de programmes.

La grille de programme peut être un EPG (pour « Electronic Program Guide » en anglais ou « Guide de programme électronique » en français). L'EPG est diffusé avec le flux, en général sur le canal du télétexte, et donne des informations sur les programmes de télévision présents et à venir.

La grille de programme peut être également une base de données distante permettant l'association programme-canal en fonction de l'heure de diffusion.

Ainsi, il est aisé, à partir de la connaissance du canal regardé et de l'heure courante, de déterminer quel est le programme diffusé. Cette information est donnée par une grille de programme.

Un dispositif destiné à l'interprétation d'un flux multimédia peut être avantageux, en lui-même, dès lors qu'il permet d'interagir avec un espace d'un réseau social en fonction d'une information de contenu lue.

Ainsi, la présente invention vise également un dispositif d'interprétation d'un flux multimédia pour une interaction avec un espace d'un réseau social. Le flux multimédia comporte au moins une information de contenu.

Le dispositif comporte :
- un récepteur pour la réception d'un flux multimédia,
- un module de lecture dans le flux d'une information de contenu,
- un module d'interaction avec un espace de réseau social en fonction de l'information de contenu lue.

En complément, le dispositif comporte un terminal de type STB (pour « Set Top Box » en anglais) ou peut simplement correspondre à un tel terminal.

Le module d'interaction peut être également appelé module client d'interaction.

Un système destiné à l'interprétation d'un flux multimédia peut être avantageux, en lui-même, dès lors qu'il permet, pour plusieurs utilisateurs de ce système, d'obtenir de façon simple les données d'interactions avec un espace d'un réseau social en fonction d'une information de contenu lue.

Ainsi, la présente invention vise également un système d'interaction avec un espace d'un réseau social. Ce système comporte :
- un dispositif du type décrit précédemment, pour une interprétation d'un flux multimédia comportant au moins une information de contenu,
- des moyens d'association entre un identifiant d'espace de réseau social et l'information de contenu lue par le module de lecture du dispositif, et
- des moyens de transmission au module d'interaction du dispositif de l'identifiant d'espace associé à l'information de contenu lue.
Par exemple, les moyens d'association et de transmission du système permettent au dispositif de type STB de connaitre l'espace du réseau social associé au programme regardé (et ainsi interagir avec celui-ci).
Ces moyens peuvent être regroupés au sein d'un même serveur disposant d'une base de données pour un ou plusieurs utilisateurs.

Un programme informatique, pour la mise en oeuvre du procédé décrit ci-avant, installé sur un équipement préexistant, est en lui-même avantageux, dès lors qu'il permet d'interagir avec un espace d'un réseau social en fonction d'une information de contenu lue.

Ainsi, la présente invention vise également un programme informatique comportant des instructions pour la mise en oeuvre du procédé précédemment décrit, lorsque ce programme est exécuté par un processeur.

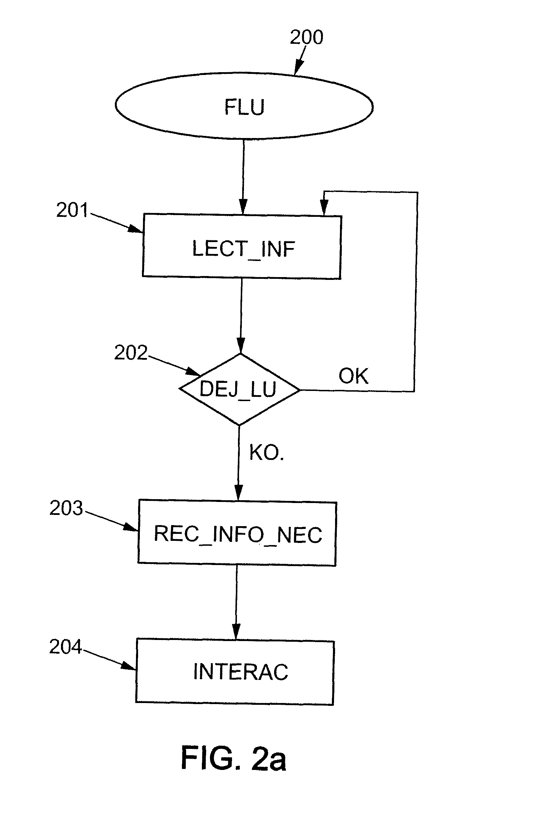

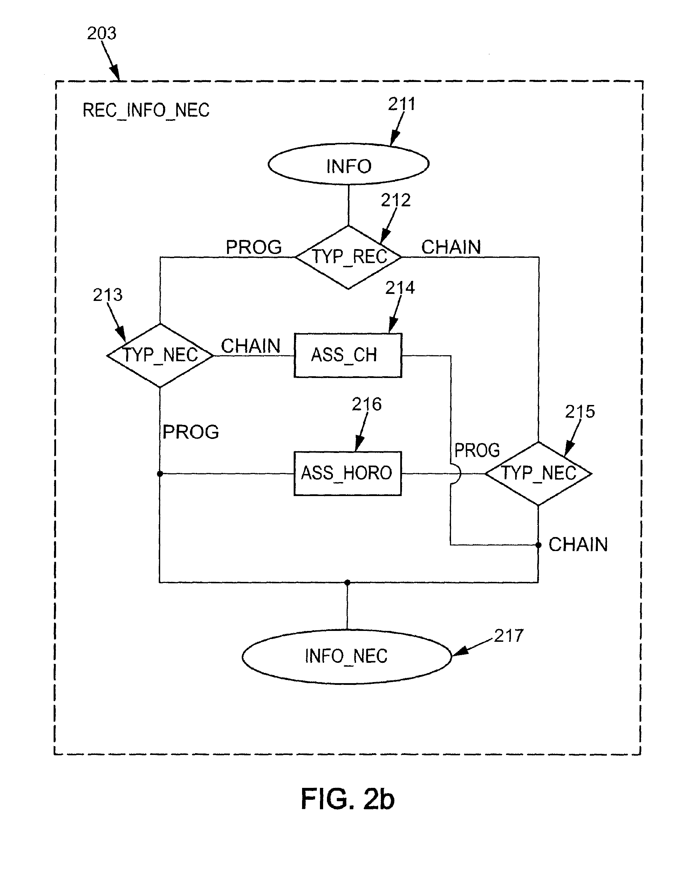

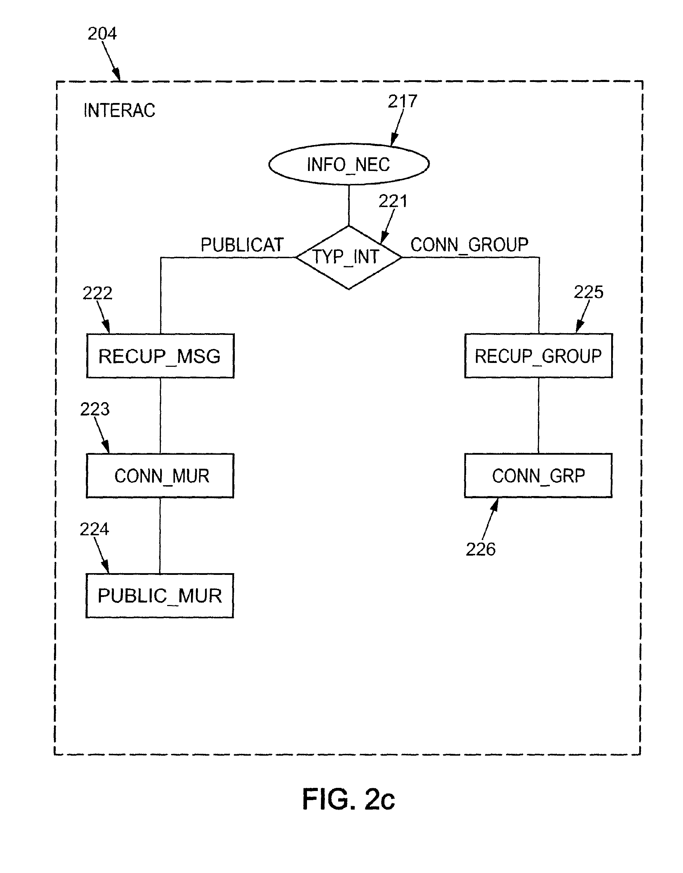

Les figures 2a, 2b, 2c décrites en détails ci-après, peuvent former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre un exemple de réseau local d'un domicile typique dans un mode de réalisation selon l'invention ;
- la figure 2a illustre une réalisation particulière du procédé d'interprétation de flux TV et d'interaction avec un réseau social pouvant être mis en oeuvre au sein d'un terminal de type STB ;
- la figure 2b illustre une réalisation particulière du procédé d'identification d'informations nécessaires pouvant être mis en oeuvre au sein d'un terminal de type STB ;
- la figure 2c illustre une réalisation particulière du procédé d'interaction avec un réseau social pouvant être mis en oeuvre au sein d'un terminal de type STB ;
- la figure 3 est un exemple de terminal de type STB dans un mode de réalisation de l'invention ;
- la figure 4 est un exemple de système de diffusion, d'enrichissement et d'association d'informations de contenu avec des informations de réseau social dans un mode de réalisation de l'invention.

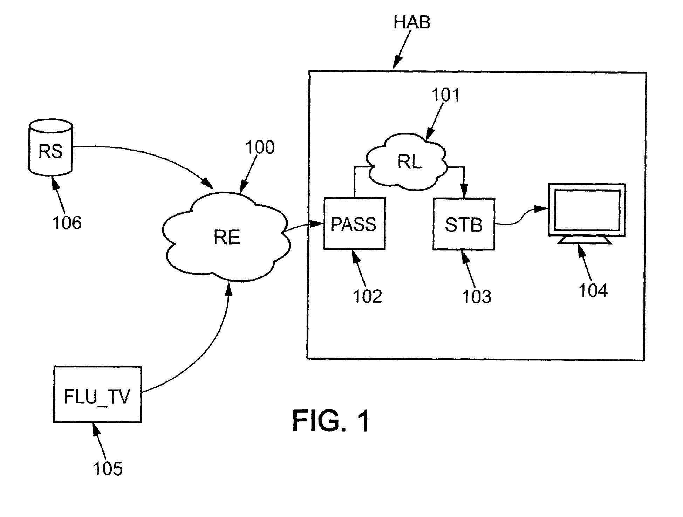

La figure 1 représente un réseau local d'un domicile typique HAB. Le réseau local comporte, dans l'exemple représenté, une passerelle 102 qui est connectée à un réseau étendu 100 de type Internet.

Dans ce réseau local, des équipements de télécommunication ont la possibilité d'échanger des données. De plus, un poste de télévision 104 peut être relié au réseau local 101. Il peut disposer d'une connexion directe au réseau ou peut être connecté par l'intermédiaire d'un terminal de type STB 103 (pour « Set Top Box » en anglais). En effet, les terminaux de type STB servent le plus souvent d'interfaces entre les réseaux locaux et les postes de télévision.

La figure 1 représente un exemple dans lequel le poste de télévision 104 n'a pas de capacité réseau mais est connecté à un terminal de type STB 103. Ainsi, il est possible de naviguer sur des sites Internet ou des réseaux sociaux en utilisant la combinaison du navigateur Internet installé sur le terminal de type STB 13 et du poste de télévision 11 comme support visuel.

Par ailleurs, il est possible de trouver sur le réseau étendu 100 (comme le réseau Internet) des réseaux sociaux 106. Un réseau social comprend un ensemble d'utilisateurs reliés entre eux par un service de réseautage social en ligne mis en oeuvre sur un réseau de communication, ici l'Internet. Sur ce réseau social, des utilisateurs peuvent se rassembler en communautés, ou groupes, et consulter, partager et/ou échanger des informations, des photos, des vidéos, etc. au sein d'espaces de réseau social, tel que des « murs », dédiés chacun à une communauté ou à un groupe. Ces espaces peuvent être privés (par exemple, les personnes autorisées à échanger sur ces espaces sont limitativement listées) ou publics (par exemple, tout utilisateur/personne peut participer aux échanges au sein de cet espace).

Enfin, les fournisseurs d'accès aux réseaux étendus proposent habituellement :
- des services de diffusion de flux de télévision par Internet (communément appelé IPTV), et/ou
- des services de vidéo à la demande, et/ou
- des services de diffusion de radio par Internet, et/ou
- des services de diffusion de musique.

Ces services sont fournis par des serveurs 105 connectés au réseau étendu 100. Habituellement, ces flux de télévision sont transmis via la passerelle 102 au terminal de type STB 103. Ces flux sont alors décodés dans le terminal de type STB 103 et affichés sur l'écran du poste de télévision 104.

Par ailleurs, le schéma fonctionnel présenté sur la figure 2a est un exemple typique de procédé mis en oeuvre, par exemple, par le terminal STB 103.

Lorsqu'un flux de télévision (ou flux TV) sur IP 200 est reçu par le terminal STB 103, ce flux 200 peut contenir de nombreuses informations en plus des informations vidéos en tant que telles.

Ainsi, le flux peut avoir été enrichi avec des métadonnées. Ces métadonnées peuvent être notamment :
- le numéro du canal diffusé,
- un identifiant associé au numéro du canal diffusé,
- le nom du programme diffusé,
- un identifiant associé au programme diffusé,
- le nom des acteurs, du réalisateur, ...,
- la catégorie de contenu diffusé,
- le titre du contenu diffusé,
- la catégorie d'âge autorisée du flux diffusé, etc.

Les métadonnées peuvent également contenir un identifiant de réseau social ou les identifiants de plusieurs réseaux sociaux.

Par exemple, ces métadonnées peuvent être contenues dans l'EPG (pour « Electronic Program Guide » en anglais ou « Guide de programmes électronique » en français) d'un flux vidéo de type MPEG2-TS.

Le terminal de type STB 103 peut extraire ces données du flux TV (étape 201). Dans l'hypothèse où les métadonnées relatives au numéro de canal (ou le cas échéant de programme) n'ont pas évolué depuis la dernière extraction par le terminal de type STB 103 (sortie « OK » du test 202), il n'est pas nécessaire, dans un exemple de réalisation, d'exécuter le reste du procédé exposé ci-dessous.

Une fois ces métadonnées lues, le terminal de type STB peut récupérer certaines informations nécessaires pour une interaction avec un réseau social (étape 203), puis interagir avec celui-ci (étape 204). Le réseau social peut être configuré par défaut dans le terminal 103 ou bien être identifié dans les métadonnées.

Par ailleurs, le schéma fonctionnel présenté sur la figure 2a est un exemple typique d'un programme dont certaines instructions peuvent être réalisées auprès du terminal de type STB 103. A ce titre, la figure 2a peut correspondre à l'organigramme de l'algorithme général d'un programme informatique au sens de l'invention.

La figure 2b détaille un mode de réalisation possible pour la récupération (étape 203) de certaines informations 217 nécessaires pour une interaction avec un réseau social (étape 204).

Après lecture des métadonnées lues 211 dans le flux TV, le terminal de type STB 103 détermine les informations nécessaires pour les interactions avec le réseau social.

On dit, par exemple, que le terminal de type STB 103 est configuré pour interagir avec le réseau social, si celui-ci est apte à une interaction avec le réseau social et si l'utilisateur a enregistré l'identifiant de ce réseau social dans une mémoire du terminal de type STB 103.

A titre d'exemple, si les métadonnées 211 du flux TV contiennent des informations relatives au canal regardé par l'utilisateur (sortie « CHAIN » du test 212) et si le terminal de type STB 103 est configuré pour interagir avec le réseau social en fonction d'informations de programme (sortie « PROG » du test 215), alors le terminal de type STB 103 fait une requête auprès d'une base de données de correspondance externe afin d'identifier une donnée de programme associée au programme diffusé à une heure donnée (par exemple l'heure courante de la requête) sur le canal désigné par les métadonnées du flux (étape 216). Cette requête peut être explicitée en langage naturel de la façon suivante : « Quel est le programme diffusé sur le canal CNN à 14h32, le 31 août 2011 ?». Cette base de données peut être également interne au terminal de type STB 103 et une simple lecture de la base de données est alors réalisée.

Si les métadonnées du flux de télévision contiennent des informations relatives au programme regardé par l'utilisateur (sortie « PROG » du test 212) et si le terminal de type STB 103 est configuré pour interagir avec le réseau social en fonction d'informations de canal (sortie « CHAIN » du test 213), alors le terminal de type STB 103 fait une requête auprès d'une base de données de correspondance externe afin d'identifier une donnée de canal associé au programme désigné par les métadonnées du flux (étape 214). Cette requête peut être explicitée en langage naturel de la façon suivante : « Sur quel canal est diffusé le programme ayant l'identifiant 'FR565478' ?». Cette base de données peut être également interne au terminal de type STB 103 et une simple lecture de la base de données est alors réalisée.

Si les métadonnées du flux de télévision contiennent des informations relatives au programme (respectivement au canal) et si le terminal de type STB 103 est configuré pour interagir avec le réseau social en fonction d'informations de programme (respectivement de canal), aucune requête à une base de données externe/interne n'est nécessaire puisque les informations lues 211 contiennent exactement les informations 217 nécessaires à l'interaction.

La figure 2c détaille un mode de réalisation des interactions possibles avec un réseau social (étape 204).

Une fois les informations nécessaires à l'interaction avec le réseau social identifiées (217), le terminal de type STB 103 peut interagir avec le réseau social. Le terminal de type STB 103 peut être configuré selon deux grands types d'interaction avec les réseaux sociaux :
- la publication automatique de messages relatifs au canal ou au programme regardé dans un espace prédéfini d'un réseau social (sortie « PUBLICAT » du test 221),
- la connexion à un espace d'un réseau social en lien avec le canal ou le programme regardé (sortie « CONN_GROUP » du test 221).

La connexion peut être automatique mais peut également dépendre du souhait de l'utilisateur (par exemple, la connexion à un espace dédié à un acteur choisi par l'utilisateur).

Ces deux types d'interaction peuvent être cumulativement activés. Bien entendu, l'utilisateur peut également désactiver complètement ces interactions sur son terminal de type STB 103. Ces interactions sont décrites ci-dessous.

Si le terminal de type STB 103 est configuré pour une publication automatique de message dans un espace prédéfini d'un réseau social (sortie « PUBLICAT » du test 221), le terminal de type STB 103 doit préalablement identifier le message à publier (étape 222).

L'espace prédéfini peut être, notamment :
- l'espace public ou restreint de l'utilisateur sur ce réseau social (ou « mur »),
- un espace du réseau social dédié à cet effet.

L'espace public d'un utilisateur peut être une page Internet regroupant l'ensemble des publications d'un utilisateur et accessible par tous.

L'espace restreint d'un utilisateur peut être une page Internet regroupant l'ensemble des publications d'un utilisateur et accessible par un ensemble défini de personnes comme ses amis, ses collègues ou encore sa famille.

L'espace dédié peut être une page Internet intitulée « les amis de la télévision » : ce dernier espace peut être public.

Afin d'identifier (étape 222) le message à publier sur l'espace prédéfini de ce réseau social, une base de données externe peut être accessible. Cette base de données associe les informations 207 (par exemple, les identifiants de programmes ou de canaux) et des messages types. Cette base de données peut être gérée par le fournisseur du réseau social. En variante, le message à afficher peut être inséré dans le contenu, éventuellement en association avec un identifiant de réseau social sur lequel le message est destiné à être affiché.

Cette base de données peut également être interne au terminal de type STB 103 et une simple lecture de la base de données est alors réalisée.

Un message type peut être associé à un identifiant de réseau social, afin notamment de permettre la publication de différents messages sur les différents réseaux sociaux respectivement. Ce message peut être un message publicitaire publié sur l'espace personnel d'un utilisateur afin d'informer ses amis que celui-ci regarde un programme de télévision.

Ce message peut être publié automatiquement par le terminal de type STB ou une confirmation de publication peut être demandée à l'utilisateur. Dans ce dernier cas un message de confirmation peut être affiché sur l'écran du poste de télévision afin d'obtenir une validation de l'utilisateur.

Avantageusement, un seul message du même type est publié par utilisateur.

Le message type peut-être personnalisé pour l'utilisateur en ajoutant son prénom, son nom, etc. A titre d'exemple ce message type peut être « M. X regarde le film 'Les incorruptibles' en ce moment sur CineMax d'OrangeTV et vous le conseille ».

Ainsi, le terminal de type STB se connecte au réseau social, et plus particulièrement à l'espace prévu à cet effet, à l'aide d'identifiants préalablement stockés dans une mémoire du terminal de type STB 103 (étape 223) puis publie le message type (étape 224).

De plus, en regardant un contenu, un utilisateur peut accepter implicitement ou explicitement de faire partie d'un groupe d'utilisateurs lié au contenu qu'il regarde lui permettant de recevoir ultérieurement, soit dans un courriel, sur son espace personnel du réseau social, des messages à caractère publicitaire liés à ce groupe.

Dans le cas de la connexion automatique à un espace d'un réseau social en lien avec le canal ou le programme regardé (sortie « CONN_GROUP » du test 221), l'espace du réseau social peut être un espace regroupant l'ensemble des personnes regardant le même canal ou le même programme. Cet espace peut être également un espace regroupant l'ensemble des connaissances de l'utilisateur regardant le même canal ou le même programme.

A partir des informations 217, le terminal de type STB peut faire une requête (étape 225) auprès d'une base de données externe afin de connaitre l'espace du réseau social associé à ces informations 217. Par exemple, si ces informations 217 indiquent que l'utilisateur regarde le canal CNN, la requête peut retourner une information d'espace de discussion selon laquelle l'espace associé est l'espace ayant comme identifiant « 1458594587 » et comme intitulé « Les spectateurs de CNN ».

Ainsi, une base de données de correspondance associant les programmes/canaux et les espaces de discussion du réseau social associés peut être gérée par l'opérateur du réseau social (ou un tiers).

Cette base de données peut également être interne au terminal de type STB 103 et une simple lecture de la base de données est alors réalisée.

Sur la base de l'information d'espace de discussion et des identifiants de connexion de l'utilisateur stocké dans une mémoire du terminal de type STB, le terminal 103 peut se connecter (étape 226) à l'espace de discussion du réseau social.

Ainsi, une fois connecté à cet espace, l'utilisateur peut échanger simplement dans cet espace avec d'autres utilisateurs. L'utilisateur peut alors envoyer et recevoir des messages de remarques, de commentaires soit textuels soit audio/vidéo sur son écran de télévision en temps réel. A titre d'illustration, un encart de discussion associé à cet espace de discussion peut être affiché sur l'écran du poste de télévision afin de permettre à l'utilisateur de continuer à regarder le programme ou le canal tout en échangeant au sein de l'espace de discussion du réseau social.

L'utilisateur peut également consulter ces messages de remarques et commentaires sur un autre équipement comme un ordinateur portable, un terminal mobile, une tablette électronique, etc.

Bien entendu, si la connexion à l'espace identifié à l'étape 225 est déjà effective, il n'est pas nécessaire d'exécuter les étapes de connexions (étape 226).

Dans un mode particulier de l'invention, l'étape de connexion (étape 226) peut être immédiatement suivie de la publication d'un message dans cet espace, notamment si d'autres personnes sont déjà connectées à cet espace. Ce message peut être un message de bienvenue afin d'informer les autres personnes qu'une nouvelle personne est connectée.

Bien entendu, l'utilisateur peut à tout moment se désinscrire des espaces auxquels il est actuellement connecté.

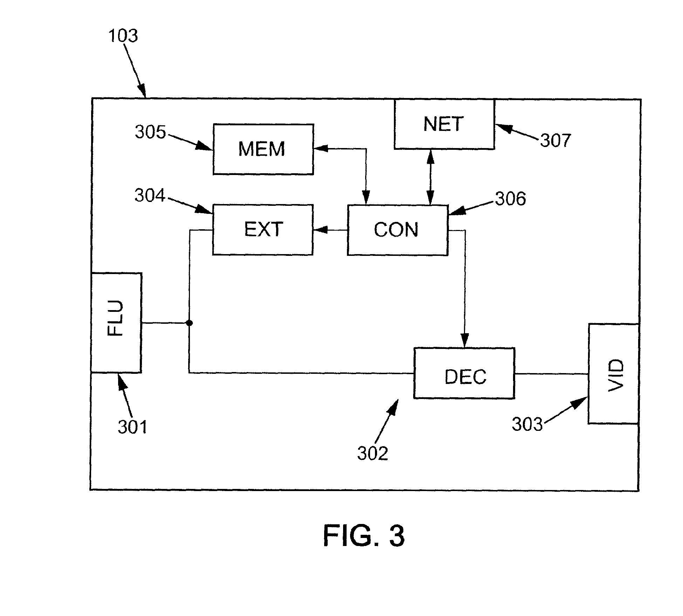

La figure 3 est un exemple de terminal de type STB 103 dans un mode de réalisation de l'invention.

Le terminal de type STB 103 dispose d'une interface 301 afin de recevoir un ou plusieurs flux TV. Cette interface peut être une interface réseau de type RJ45 ou Wifi ou encore une interface coaxiale.

Une fois le flux TV réceptionné, celui-ci est interprété en signal vidéo interprétable par un poste de télévision par un module 302 adapté à cet effet. Le flux TV peut être un flux de type MPEG2-TS transporté par un réseau IP (pour « Internet Protocol » en anglais). Le signal vidéo peut être un signal de type VGA, DVI, ou encore péritel. Ce signal est transmis au poste de télévision via une interface de sortie 303. Par ailleurs, il est possible d'extraire les métadonnées du flux TV au moyen d'un module d'extraction 304.

Une fois les métadonnées extraites, celles-ci sont transmises à un module 306 gérant les interactions avec le réseau social.

Les paramètres de ce réseau social (nom, URL, etc.) sont stockés dans une mémoire 305 du terminal de type STB 103. En effet, plusieurs réseaux sociaux peuvent être proposés à l'utilisateur notamment en fonction de sa préférence et/ou du type de programme regardé.

Si besoin, le module d'interaction 306 peut faire une requête auprès d'un serveur distant (ou d'une mémoire local) afin de connaitre le canal ou le programme associé aux métadonnées extraites. Cette requête est alors transmise au serveur distant via une interface réseau connectée à un réseau étendu sur lequel se trouve ce serveur. Par ailleurs, ce module d'interaction est configuré pour, une fois le canal ou le programme associé aux métadonnées extraites connu, identifier l'espace du réseau social associé à ce canal ou ce programme (ou identifier le message type associé à ce canal ou ce programme) comme décrit dans le procédé des figures 2a, 2b et 2c. Cette identification peut être réalisée au moyen d'une table d'association stockée dans la mémoire 305 du terminal de type STB 103. Cette identification peut également être réalisée au moyen d'une requête transmise via l'interface 307 à un serveur distant.

Enfin, une connexion à l'espace du réseau social est effectuée par le module d'interaction 306. Si nécessaire, cette interaction est réalisée auprès du réseau social à l'aide des identifiants de l'utilisateur qui sont stockés dans la mémoire 305.

Le réseau social pouvant être hébergé sur un serveur distant connecté à Internet, cette connexion consiste en un ensemble d'échange de messages réseau transmis au réseau social via l'interface 307.

Enfin, le module de connexion 306 peut avantageusement informer le module d'interprétation 302 afin que ce dernier insère dans le signal vidéo délivré au poste de télévision l'espace de discussion du réseau social. Par exemple, cette insertion peut consister à afficher en bas à droite de l'écran du poste de télévision une fenêtre affichant les derniers messages de l'espace de discussion. Cette fenêtre est de dimensions relativement petites par rapport à celles du poste de télévision, de telle sorte que l'utilisateur puisse continuer à regarder le canal ou le programme tout en étant connecté à l'espace.

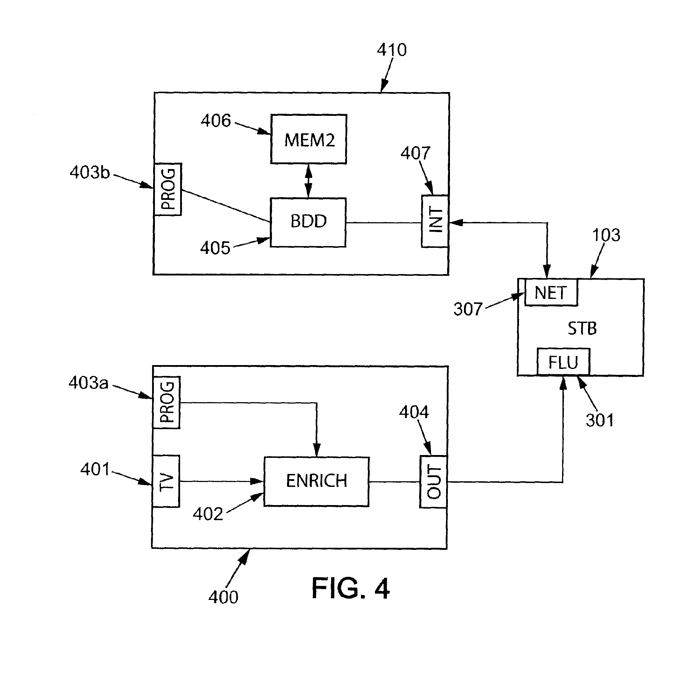

La figure 4 est un exemple de système de diffusion, d'enrichissement d'un flux TV et d'association d'information de contenus avec des espaces d'un réseau social dans un mode de réalisation de l'invention.

Un serveur d'enrichissement 400 reçoit un premier flux TV à enrichir sur une interface d'entrée 401. Une fois ce flux reçu, des métadonnées peuvent être insérées dans ce flux par un module d'enrichissement 402. Ces métadonnées peuvent être une information relative au canal ou au programme diffusé (ou encore un identifiant de film en vidéo à la demande le cas échéant).

Les informations à insérer comme métadonnées dans le flux sont reçues par le serveur d'enrichissement 400 via une interface d'entrée 403a et sont transmises au module 402 pour effectuer l'enrichissement du flux TV. Ce flux TV est alors délivré aux terminaux clients de type STB 103 via une interface de diffusion 404.

Par ailleurs, les informations délivrées via l'interface 403a sont également transmises à un serveur d'association 410 via une interface 403b. Ces informations sont alors transmises à un module 405 de peuplement de base de données afin de stocker certaines associations. Notamment, ces associations peuvent permettre de connaitre :
- une canal connaissant l'identifiant d'un programme ;
- un programme connaissant l'identifiant d'un canal et une heure de diffusion ;
- l'identifiant d'un espace d'un réseau social associé à un programme (respectivement à un canal) connaissant l'identifiant de ce programme (respectivement de ce canal) ;
- un message type associé à un programme (respectivement à un canal) connaissant l'identifiant de ce programme (respectivement de ce canal).

Cette base de données peut être enregistrée dans une mémoire 406 de ce serveur 410. Cette base de données peut être interrogée via une interface réseau 407. Cette interface communique alors au module 405 un message indiquant quelles données doivent être retournées ainsi que les informations de sélection nécessaires (par exemple, l'identifiant du canal diffusé ainsi qu'une heure de diffusion).

Le module 405 lit enfin la mémoire 406 sur laquelle sont stockées les différentes associations et retourne un message contenant les informations demandées (par exemple, l'identifiant du programme) à l'interface 407 pour que ce message soit délivré au terminal de type STB 103 ayant effectué la requête.

Bien entendu, la présente invention ne se limite pas aux formes de réalisation décrites ci-avant à titre d'exemples ; elle s'étend à d'autres variantes.

D'autres réalisations sont en effet possibles.

La description qui précède présente des diffusions de flux TV mais d'autres variantes peuvent être envisagées. En effet, une diffusion de flux de radiodiffusion est également possible sans modification substantielle de la description. Ainsi, les identifiants de programmes sont alors des identifiants d'émission de radio et les identifiants de canaux sont des identifiants de canaux de diffusion ou de nom de radio. Par ailleurs, une diffusion d'un flux de vidéo à la demande est également possible sans modifications substantielles de la description. Ainsi, les identifiants de programmes peuvent être des identifiants du film dont la diffusion a été demandée. Les identifiants de canaux peuvent être alors un identifiant constant.

Les identifiants de contenus peuvent également être l'identifiant d'espace d'un réseau social. Ainsi, le flux est directement enrichi avec cette information et aucune requête externe n'est nécessaire pour connaitre ce dernier. L'étape 225 de la Figure 2c est alors superflue.

Par ailleurs, le procédé (décrit dans les figures 2a, 2b et 2c) peut être réexécuté afin de détecter un éventuel changement de canal ou de programme par l'utilisateur. Ainsi, dans le cas d'un changement de contenu (changement de canal de télévision ou passage au programme suivant sur le même canal de télévision), une déconnexion de l'espace du réseau social et une reconnexion à un nouvel espace peuvent être effectuées. Par ailleurs, une seule de ces deux actions (déconnexion et reconnexion) peut être effectuée en fonction de la configuration du terminal de type STB 103.

Dans le cas d'un changement de programme ou de canal, il est également possible de retarder la déconnexion et reconnexion de l'utilisateur aux espaces de discussion du premier contenu et du nouveau.

Dans le cas d'un changement de canal, il est également possible d'afficher l'espace de discussion du nouveau contenu sans inscrire l'utilisateur à cet espace de discussion afin de laisser le choix à l'utilisateur soit de changer de canal à nouveau soit de rester sur ce programme. Si l'utilisateur décide de rester sur ce canal et après un certain laps de temps, le service de réseau social peut connecter automatiquement l'utilisateur à ce nouvel espace de discussion et le déconnecter de l'espace du premier contenu.

Par ailleurs, le procédé décrit précédemment sur le terminal de type STB 103 peut être effectué à un autre endroit du réseau : par exemple, les étapes 201 à 214 (ou une sous parties de celles-ci) peuvent être exécutées
- au niveau du serveur 105 délivrant le flux de télévision, ou
- au niveau d'un serveur de réseaux sociaux, ou
- au niveau d'un serveur tiers.

## Revendications

1. Procédé mis en oeuvre par des moyens informatiques, d'interprétation d'un flux multimédia (200) pour une interaction avec un espace d'un réseau social, le flux (200) comportant au moins une information de contenu transporté dans le flux,
le procédé comportant les étapes :
- réception du flux (200),
- lecture (201) dans le flux (200) de l'information de contenu multimédia,
- interaction (204) avec un espace de réseau social en fonction de l'information de contenu lue.

2. Procédé selon la revendication 1, dans lequel le flux est un flux de données télévisuelles ou de radiodiffusion (200), et dans lequel ladite information comporte une information de programme et/ou de canal.

3. Procédé selon la revendication 1, dans lequel le flux est un flux de données télévisuelles ou de radiodiffusion (200), et dans lequel ladite information comporte une information d'identification d'un réseau social.

4. Procédé selon l'une des revendications précédentes, dans lequel le procédé comprend en outre l'étape :
- identification (225) d'un espace choisi d'un réseau social associé au moins à l'information de contenu lue,
et dans lequel l'interaction (204) avec un espace de réseau social comprend une étape de connexion (226) à cet espace choisi.

5. Procédé selon l'une des revendications 1 à 4, dans lequel l'interaction (204) avec un espace de réseau social comprend les étapes:
- connexion (223) à un espace de réseau social prédéterminé,
- publication d'un message (224) dans l'espace de réseau social prédéterminé, le message étant fonction de ladite information de contenu lue.

6. Procédé selon l'un des revendications 2 ou 3, le flux multimédia (200) réceptionné comportant au moins une information de canal,
le procédé est **caractérisé en ce que** l'interaction (204) avec un espace du réseau social est en outre fonction d'un paramètre temporel.

7. Procédé selon la revendication 6, **caractérisé en ce que** l'interaction (204) avec un espace du réseau social est fonction d'une information de programme,
l'information de programme étant déterminée par croisement (216) de l'information de canal lue et du paramètre temporel dans une grille de programmes.

8. Dispositif (103) d'interprétation d'un flux multimédia (200) pour une interaction avec un espace d'un réseau social, le flux multimédia (200) comportant au moins une information de contenu,
le dispositif comportant :
- un récepteur (301) pour la réception d'un flux multimédia,
- un module de lecture (304) dans le flux d'une information de contenue,
- un module d'interaction (306) avec un espace de réseau social en fonction de l'information de contenu lue

9. Système (400) d'interaction avec un espace d'un réseau social, comportant :
- un dispositif selon la revendication 8, pour une interprétation d'un flux multimédia (200) comportant au moins une information de contenu,
- des moyens d'association (405) entre un identifiant d'espace de réseau social et l'information de contenu lue par le module de lecture du dispositif, et
- des moyens de transmission (407) au module d'interaction du dispositif de l'identifiant d'espace associé à l'information de contenu lue.

10. Produit programme informatique comportant des instructions pour la mise en oeuvre du procédé selon l'une des revendications 1 à 7, lorsque ce programme est exécuté par un processeur.
